# EUROPEAN PATENT SPECIFICATION

(11) **EP 2 667 395 B1**
(45) Date of publication and mention of the grant of the patent: **23.03.2016**
(21) Application number: 11856618.1
(22) Date of filing: 18.10.2011
(51) Int. Cl.: H01H 33/66, H02B 13/035

(54) **GAS INSULATED SWITCHGEAR**
GASISOLIERTES SCHALTGETRIEBE
DISPOSITIF DE COMMUTATION À ISOLATION GAZEUSE

(30) Priority: 18.01.2011 KR 20110004746
(43) Date of publication of application: 27.11.2013
(73) Proprietor: Hyundai Heavy Industries Co., Ltd., Ulsan 682-792 (KR)
(72) Inventor: LEE, Chulho, Ulsan 682-807 (KR); KIM, Jihoon, Ulsan 683-783 (KR)
(74) Representative: Carpintero Lopez, Francisco
(86) International application number: PCT/KR2011/007744
(87) International publication number: WO 2012/099316

(56) References cited:
- WO-A1-2008/119655
- JP-A- 7 123 546
- KR-A- 20060 014 539
- KR-A- 20080 095 143
- KR-B1- 100 886 587
- KR-Y1- 200 420 983
- US-A- 4 297 553
- US-A1- 2003 062 340
- US-A1- 2008 042 786
- US-A1- 2009 120 907

## Description

### Technical Field

The present invention relates to a gas insulated switchgear. More particularly, the present invention relates to a switchgear in which a disconnector of a main line portion and a disconnector of a load drawing line portion are linearly arranged at both sides of a power circuit breaker, respectively, and safe switching operation is possible by means of a linear insulating rod.

### Background Art

When short-circuit accident and the like take place in power-transmission equipment, a high current of thousands to tens thousands amperes flows in a cable. Therefore, if the flow of the high current is not cut off, a clothing of the cable is instantly melted, suffering heat emission and ignition, because the cable has merely the performance of a withstand current of hundreds of amperes or so.

And, upon this short-circuit accident occurrence, a high load is applied to a transformer or power generator of a power supplying company. Therefore, there is a need to quickly cut off the high current. For this, a Gas Insulated Switchgear (GIS) is installed in the power-transmission equipment.

A disconnector or a circuit breaker is installed in the gas insulated switchgear. This disconnector or circuit breaker is installed within an airtight container filled with Sulfur Hexafluoride (SF₆) gas.

The SF₆ gas is a gas having the same insulation performance as insulation oil at a pressure of 0.3 Mega Pascal (MPa). However, a decrease of the pressure results in deterioration of the insulation performance of the SF₆ gas. So, a switchgear such as a gas insulated switchgear and the like needs a function of alarming the decrease of the gas pressure. If the pressure more decreases, the switchgear is automatically locked such that the circuit breaker is not switched on/off.

And, if moisture contained in the SF₆ gas increases, a dewfall is generated on an insulating material surface, causing a decrease of insulation endurance. Therefore, a desiccant is installed within the switchgear and also, regular moisture measurement in the gas is needed.

Also, if an arc is generated due to a partial discharge in the SF₆ gas, a sulfur fluoride is generated such as SF₄, S₂F₂ and the like. This is called a gas decomposition product. If this gas decomposition product contains moisture, the gas decomposition product is changed into SOF₂, SO₂F₂, HF and the like, degenerating insulating materials and the like. Because of this, it is required to regularly analyze a gas component and check the existence or absence of the partial discharge.

Meantime, if a current flowing in an electric circuit is cut off forcibly, because of the properties of electricity intending to flow continuously in the electric circuit, the movement of electrons between the electrodes takes place and a discharge succeeds, although electrodes are really separated. This flow of electrons is an arc. The arc makes the current continuously flow while producing light and heat.

The arc is a plasma state of ionized air, and emits heat and light at a temperature of one ten thousand degrees. Also, due to the conductivity of the arc, electricity continuously flows through the arc. Rapidly cooling the arc to remove the conductivity of the arc and quench the arc is a role of the circuit breaker.

In a case of an alternating-current circuit, because of a cycle of plus-zero-minus-zero, the arc is extinguished at a zero point, if the conductivity of the arc decreases due to cooling. But, if insulation is not perfect, the arc is revived.

Also, if a rated interrupting capacity is erroneously selected, upon interruption, the arc is regenerated, damaging the circuit breaker. And, if this causes the power failure of a transformer, power failure takes place in a neighborhood zone too. Accordingly, it is important to select equipment for ensuring the extinguishment of the arc.

The extinguishment of the arc is a main purpose of a high-voltage circuit breaker. In the conventional art, an Oil Circuit Breaker (OCB) having insulation oil therein has been used but is not currently used because of the danger of fire.

In addition to this, there is an Air Circuit Breaker (ACB). The ACB is not almost supplied because of a problem that a generator of a compressed air used for cut-off is excessively large, or a high-volume sound for cut-off results from the compressed air.

Therefore, in recent years, a Gas Circuit Breaker (GCB) or Vacuum Circuit Breaker (VCB) filled with an insulating gas is being used widely.

Meantime, the disconnector, a device for simply switching on/off a charged circuit, has the performance of enabling a short-circuit current to flow during a specific time without abnormality. But, a current flowing circuit cannot be broken by the disconnector. Because the disconnector is not equipped with an arc extinguishing instrument, if a flow state is cut off by the disconnector in a load current state, an arc is generated and, if the generated arc comes in contact with a terminal, a short-circuit accident occurs. And, a cubicle is damaged and a power failure accident and the like occur, and there is a risk that a disconnector operator shall be burned or wounded due to the arc as well.

Accordingly, an interlock means is commonly provided such that the disconnector is not operated when the circuit breaker is in an on state.

Examples of switchgears in the state of the art can be found in WO 2008/119655, US 2003/062340, US 2008/042786, US 4297553 and US 2009/120907.

### Disclosure of Invention

### Technical Problem

The conventional switchgear has a circuit-breaker housing case and a disconnector housing case separately, each being filled with an insulating gas, and further has a ground switch or ground switching unit. So, because the switchgear is complex in structure and is large in size, there were many limitations in installation and also, these became the cause of cost rise.

And, if a worker first operates a disconnector before a circuit breaker with carelessness when performing the maintenance and inspection of the switchgear, there was an issue that an arc is generated, causing mass power outages as described above.

### Solution to Problem

An aspect of exemplary embodiments of the present invention is to address at least the problems and/or disadvantages and to provide at least the advantages described below. Accordingly, an aspect of exemplary embodiments of the present invention is to provide a switchgear which removes erroneous operations, significantly reduces the size of the switchgear to enable easy installation, and largely improves safety through the removal of an arc, by integrally mounting the disconnector around the circuit breaker to prevent the inversion of operating orders of the disconnector and the circuit breaker, and integrating switching operations of the circuit breaker and the disconnector to sequentially perform the switching operations through an operating rod linearly connected to the circuit breaker and the disconnector.

According to the present invention, there is provided a gas insulated switchgear integrally having a case and a circuit breaker and a disconnector within the case, and being filled with an insulating gas for preventing the generation of an arc resulting from open-circuit. A disconnector of a main line portion detachably coupled to a contact point of the main line portion and a disconnector of a load drawing line portion detachably coupled to a contact point of the drawing line portion are linearly arranged at the left and right of the circuit breaker, and the circuit breaker has a conduction part performing conduction and insulation depending on linear movement, and the disconnector of the main line portion has an operating rod of the main line portion linearly connected with the conduction part and a conductive member of the main line portion linked to the operating rod of the main line portion and is detached from the contact point of the main line portion and is connected to a ground of the main line portion by virtue of a horizontal movement of the operating rod of the main line portion, and the disconnector of the drawing line portion has an operating rod of the drawing line portion linearly connected with the conduction part and a conductive member of the drawing line portion linked to the operating rod of the drawing line portion and is detached from the contact point of the drawing line portion and is connected to a ground of the drawing line portion by virtue of a horizontal movement of the operating rod of the drawing line portion and, when the operating rod of the main line portion moves in length direction, the circuit breaker is first insulated and then, the disconnector of the main line portion is insulated leaving a time difference and then, the disconnector of the drawing line portion is insulated leaving a time difference.

The conductive member of the main line portion of the disconnector of the main line portion is provided to be movable in a vertical direction with respect to the direction of the horizontal movement of the operating rod of the main line portion, and the conductive member of the main line portion is connected to a link bar integrally coupled with a support bar in a vertical direction with respect to the length direction of the support bar and provided to be elastically rotatable pivoting on the support bar, the support bar protruding in a vertical direction with respect to the length direction of the operating rod of the main line portion and being provided to be rotatable, whereby the conductive member of the main line portion is moved from the contact point of the main line portion to the ground of the main line portion by virtue of the horizontal movement of the operating rod of the main line portion.

The conductive member of the main line portion has a long sliding groove in the length direction of the conductive member of the main line portion, and a protrusion of the link bar is slidably fitted into the sliding groove.

The conductive member of the drawing line portion of the disconnector of the drawing line portion is provided to be movable in a vertical direction with respect to the direction of the horizontal movement of the operating rod of the drawing line portion, and the conductive member of the drawing line portion is connected to a link bar integrally coupled with a support bar in a vertical direction with respect to the length direction of the support bar and provided to be elastically rotatable pivoting on the support bar, the support bar protruding in a vertical direction with respect to the length direction of the operating rod of the drawing line portion and being provided to be rotatable, whereby the conductive member of the drawing line portion is moved from the contact point of the drawing line portion to the ground of the drawing line portion by virtue of the horizontal movement of the operating rod of the drawing line portion.

The operating rod of the drawing line portion has a long sliding through-hole in the length direction of the operating rod of the drawing line portion, and the support bar is rotatably coupled to a slider which is slidably fitted into the sliding through-hole, and the link bar is integrally connected at its one end to the support bar and is rotatably connected at the other end to the conduction member of the drawing line portion.

### Effects of Invention

Compared to the conventional art, a gas insulated switchgear according to the present invention remarkably reduces the size of the switchgear, thereby removing a spatial limitation to installation as well as reducing a cost.

And, the gas insulated switchgear according to the present invention has a noticeable effect of greatly improving safety by removing the danger of the inversion of operation orders of a disconnector and a circuit breaker and fundamentally removing the risk of arc generation caused by a handling error.

### Brief Description of Drawings

The above and other objects, features and advantages of the present invention will become more apparent from the following detailed description when taken in conjunction with the accompanying drawings in which:
FIG. 1 is a perspective diagram schematically illustrating a gas insulated switchgear according to a preferable exemplary embodiment of the present invention;
FIG. 2 is schematic side section and front section diagrams of FIG. 1;
FIG. 3 is a side section diagram illustrating a state of before a disconnector of a main line portion of the gas insulated switchgear of FIG. 1 is switched;
FIG. 4 is a side section diagram illustrating a state of after a disconnector of a main line portion of the gas insulated switchgear of FIG. 1 is switched;
FIG. 5 is a schematic perspective diagram describing a switching operation of a disconnector of a main line portion of the gas insulated switchgear of FIG. 1;
FIG. 6 is a schematic perspective diagram describing a switching operation of a disconnector of a drawing line portion of the gas insulated switchgear of FIG. 1; and
FIG. 7 is a partially explosive schematic perspective diagram of FIG. 6.

** Description of main symbols of the drawings**
1: gas insulated switchgear
2: contact point of main line portion
3: contact point of drawing line portion
4: ground of main line portion
5: ground of drawing line portion
7, 8: insulator
10: circuit breaker
101: conduction part
120: connection member
20: disconnector of main line portion
201: conductive member of main line portion
202: operating rod of main line portion
203: sliding groove
204: link bar
205: concave circumference groove
206: spring
207: support bar
210: insulating rod
211, 212: openings
30: disconnector of drawing line portion
301: conductive member of drawing line portion
302: operating rod of drawing line portion
303: sliding through-hole
304: link bar
305: concave circumference groove
306: spring
307: support bar
308: slider
309: concave rail
311, 312: openings

Throughout the drawings, the same drawing reference numerals will be understood to refer to the same elements, features and structures.

### Best Mode for Carrying out the Invention

Exemplary embodiments of the present invention will now be described in detail with reference to the annexed drawings.

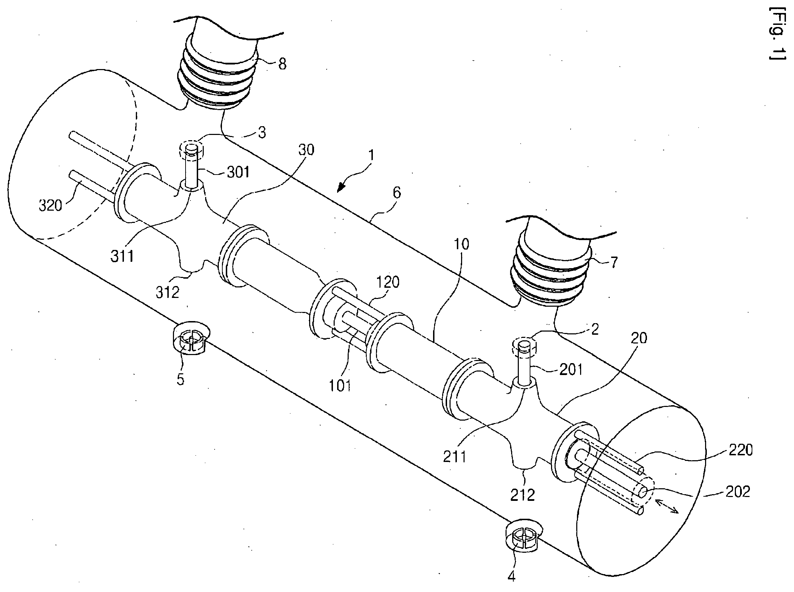

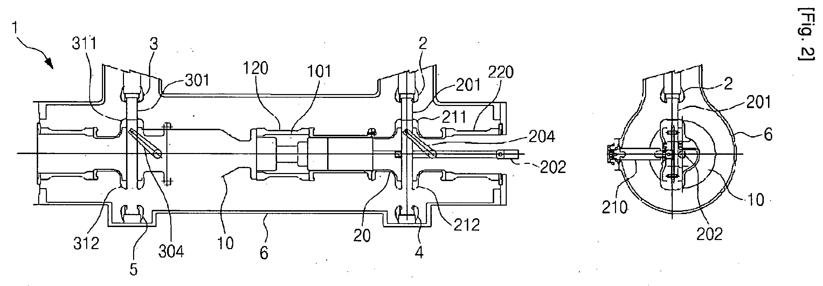

FIG. 1 is a perspective diagram schematically illustrating a gas insulated switchgear according to a preferable exemplary embodiment of the present invention, and FIG. 2 is schematic side section and front section diagrams of FIG. 1.

As illustrated in FIG. 1, the gas insulated switchgear 1 of this exemplary embodiment has linearly connects a disconnector 20 of a main line portion and a disconnector 30 of a load drawing line portion at both sides of a circuit breaker 10, respectively, within a case 6.

The circuit breaker 10 is constructed to connect left and right bodies by a plurality of connection members 120, and is provided to linearly connect a conduction part 101 by support of the connection members 120 and electrically insulate or interrupt the conduction part 101.

And, the conduction part 101 is constructed to have a female member (not shown) concavely formed in a body of the right side viewed from the drawing and a male member (not shown) protruding from a body of the left side and fitted into and conduction-coupled to the female member, such that the female member is pulled backward by an operating rod 202 of the main line portion described later and is conduction-released from the male member and, when the female member moves backward and gets away, the female member is moved by a constant distance and then pulls the male member.

To make possible this operation, a part ranging from a free end of the male member to a middle thereof is formed of electrical insulating materials, and the remnant part excepting the insulating part of the male member is formed of conduction materials. And, a protrusion is formed at the free end of the insulating part of the male member, and a chin is formed within the female member such that the male member is slid by a constant distance into the female member and then, the protrusion of the male member is caught within the female member to move the male member and the female member together.

Accordingly, although the female member is pulled by the operating rod 202 of the main line portion and is electrically interrupted from the male member after the male member and the female member are conduction-coupled to each other, a connected state is maintained between the male member and the female member. By this, as described later, an operating rod 302 of a drawing line portion connected to the male member can be operated leaving a time difference with the operating rod 202 of the main line portion.

At normal times, the gas insulated switchgear 1 of this exemplary embodiment is electrically conducted ranging from a contact point 2 of the main line portion to a conductive member 201 of the main line portion, the conduction part 101, a conductive member 301 of the drawing line portion, and a contact point 3 of the drawing line portion.

Meantime, at switching operation of the gas insulated switchgear 1, the circuit breaker 10 is first electrically interrupted and then, the disconnector 20 of the main line portion is electrically interrupted leaving a time difference and then, the disconnector 30 of the drawing line portion is electrically interrupted again leaving a time difference. This operation is achieved by linearly connecting the operating rod 202 of the main line portion, the conduction part 101 composed of the male member and the female member, and the operating rod 302 of the drawing line portion.

A construction of enabling the aforementioned time-difference operation is described below.

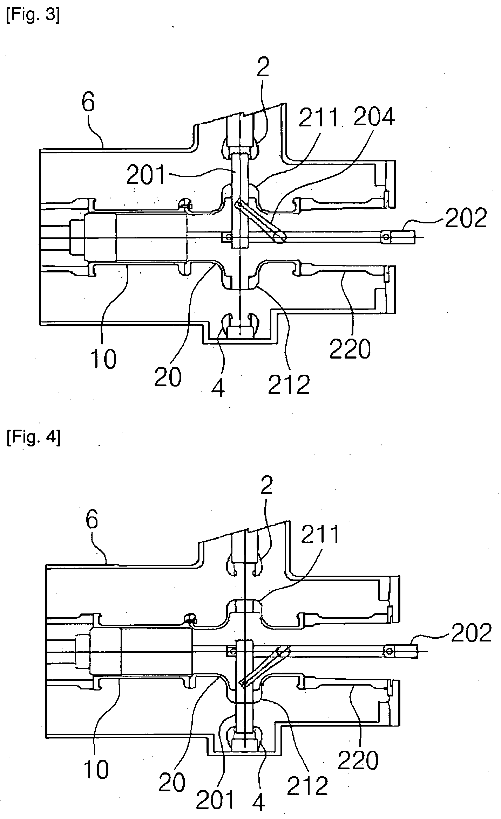

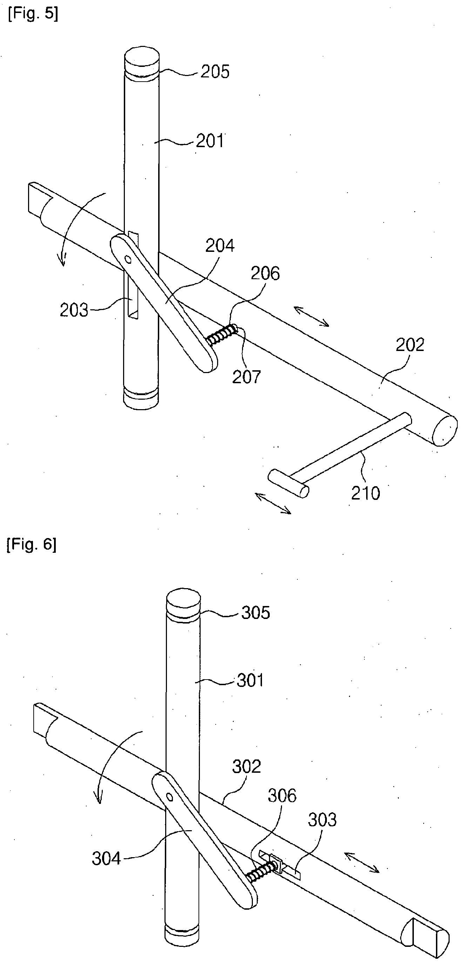

FIG. 3 is a side section diagram illustrating a state of before the disconnector of the main line portion of the gas insulated switchgear of FIG. 1 is switched. FIG. 4 is a side section diagram illustrating a state of after the disconnector of the main line portion of the gas insulated switchgear of FIG. 1 is switched. FIG. 5 is a schematic perspective diagram describing a switching operation of the disconnector of the main line portion of the gas insulated switchgear of FIG. 1.

The disconnector 20 of the main line portion is composed of the operating rod 202 of the main line portion and the conductive member 201 of the main line portion. The operating rod 202 of the main line portion has the properties of insulation and is installed to be movable in horizontal direction. The conductive member 201 of the main line portion is linked to the operating rod 202 of the main line portion to operate in up/down direction, and is coated on its surface with conductive materials. An insulating rod 210 is protruded and installed at the operating rod 202 of the main line portion, and this insulating rod 210 is forced to move the operating rod 202 of the main line portion in a horizontal direction.

As illustrated in FIGS. 3 and 4, the conductive member 201 of the main line portion is constructed such that, at normal times, a concave circumference groove 205 provided at an end of the conductive member 201 of the main line portion is caught by and fitted to the contact point 2 of the main line portion and, at operation of the gas insulated switchgear 1, the concave circumference groove 205 is detached from the contact point 2 of the main line portion and is fitted to a ground 4 of the main line portion.

Also, the conductive member 301 of the drawing line portion is constructed such that, at normal times, a concave circumference groove 305 provided at an end of the conductive member 301 of the drawing line portion is caught by and fitted to the contact point 3 of the drawing line portion and, at operation of the gas insulated switchgear 1, the concave circumference groove 305 is detached from the contact point 3 of the drawing line portion and is fitted to a ground 5 of the drawing line portion.

FIG. 5 is a schematic perspective diagram describing a switching operation of the disconnector of the main line portion of the gas insulated switchgear of FIG. 1.

A support bar 207 is rotatably fitted at its one end to one side part of a body of the operating rod 202 of the main line portion, and is integrally coupled at the other end to a link bar 204. And, a spring 206 is fitted to the support bar 207 to give an elastic force when the link bar 204 is rotated in one direction with pivoting on the support bar 207.

Meantime, the link bar 204 has a protrusion (not shown) protruding in the lateral direction of the link bar 204. The protrusion of the link bar 204 is integrally formed at the other end of the link bar 204. A sliding groove 203 is provided in the middle of a body of the conductive member 201 of the main line portion. The protrusion of the link bar 204 is slidably fitted into the sliding groove 203 of the conductive member 201 of the main line portion. At normal times, the protrusion of the link bar 204 is in elastic contact with an inner wall of one side of the sliding groove 203 by means of the elastic force of the spring 206.

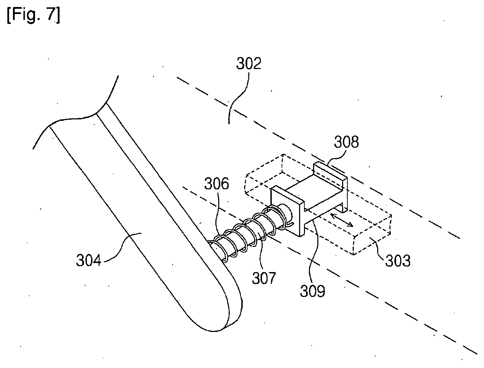

FIG. 6 is a schematic perspective diagram describing a switching operation of the disconnector of the drawing line portion of the gas insulated switchgear of FIG. 1. FIG. 7 is a partially explosive schematic perspective diagram of FIG. 6.

In a case of the disconnector 30 of the drawing line portion, the operating rod 302 of the drawing line portion has a sliding through-hole 303, and a support bar 307 is rotatably connected to a slider 308 which slides in horizontal direction within the sliding through-hole 303. The slider 308 has '⊏'-shaped upper and lower concave rails 309, respectively, having the 'H'-shaped body on the whole. And, a spring 306 is fitted to the support bar 307 to give an elastic force when a link bar 304 rotates in one direction with pivoting on the support bar 307.

At normal times of maintaining a conduction state on the whole, the slider 308 is located at an end of the right side viewed from the drawing within the sliding through-hole 303. And, at switching operation, the slider 308 gets close to an end of the left side viewed from the drawing within the sliding through-hole 303 according to the movement of the operating rod 302 of the drawing line portion. After the slider 308 gets in contact with the end of the left side, if the operating rod 302 of the drawing line portion moves farther, a pull-down force is applied to the conductive member 301 of the drawing line portion through the link bar 304. By virtue of this pull-down force, the conductive member 301 of the drawing line portion is released from the contact point 3 of the drawing line portion to which one of the concave circumference grooves 305 provided at both ends of the conductive member 301 of the drawing line portion is fitted, and the conductive member 301 of the drawing line portion is fitted to the ground 5 of the drawing line portion by virtue of a downward movement momentum gained from the elastic force of the spring 306.

It is preferable that the disconnector 20 of the main line portion and the disconnector 30 of the drawing line portion are housed in exclusive cases, respectively. It is preferable that the cases have upper and lower openings 211 and 212, and 311 and 312, respectively, such that the openings 211, 212, 311, and 312 support the vertical movement of the conductive member 201 of the main line portion and the conductive member 301 of the drawing line portion to the respective grounds 4 and 5. And, the disconnector 20 of the main line portion and the disconnector 30 of the drawing line portion are supported by coupling members 220 and 320, respectively, and are installed in the middle of an internal space of the case 6.

As described above, after the operating rod 202 of the main line portion is pulled in horizontal direction and thus the circuit breaker 10 is interrupted, if the operating rod 202 of the main line portion more moves in the pulled-and-moved direction, the link bar 204 moves in the movement direction while the protrusion of the link bar 204 begins to move downward within the sliding groove 203 by virtue of the elasticity force of the spring 206. If the movement of the operating rod 202 of the main line portion proceeds until restraint on the protrusion of the link bar 204 is all released, the elastic force of the protrusion of the link bar 204 pressurizes a bottom part of the sliding groove 203. By this pressurization force, the conductive member 201 of the main line portion is released from the contact point 2 of the main line portion and subsequently, the conductive member 201 of the main line portion is fitted at its lower end to the ground 4 of the main line portion.

After the conductive member 201 of the main line portion is fitted to the ground 4 of the main line portion, if the operating rod 202 of the main line portion is more moved and the operating rod 302 of the drawing line portion connected to the conduction part 101 of the circuit breaker 10 is further pulled in the movement direction, the conductive member 201 of the main line portion is coupled to the ground 4 of the main line portion by virtue of the interaction of the sliding through-hole 303 and the slider 308 and then, with laying a constant time difference, the conductive member 301 of the drawing line portion is detached from the contact point 3 of the drawing line portion and is coupled to the ground 5 of the drawing line portion.

Accordingly, the gas insulated switchgear 1 according to the present invention can fundamentally prevent the disconnectors 20 and 30 from being first insulated before the circuit breaker 10, and can secure safety because achieving sequential electrical insulation leaving a time difference by a simple link structure.

While the invention has been shown and described with reference to a certain preferred embodiment thereof, it will be understood by those skilled in the art that various changes in form and details may be made therein without departing from the scope of the invention as defined by the appended claims.

## Claims

1. A gas insulated switchgear (1) integrally having a case (6), a circuit breaker (10) and a disconnector within the case (6), and being filled with an insulating gas for preventing the generation of an arc resulting from open-circuit, a disconnector (20) of a main line portion detachably coupled to a contact point (2) of the main line portion and a disconnector (30) of a load drawing line portion detachably coupled to a contact point (3) of the drawing line portion are linearly arranged at the left and right of the circuit breaker (10),
the circuit breaker (10) has a conduction/insulation part (101) performing conduction and insulation depending on the position of an operating rod (202) of the main line portion when said operating rod (202) moves in length direction,
the disconnector (20) of the main line portion has the operating rod (202) of the main line portion linearly connected with the conduction/insulation part (101) and a conductive member (201) of the main line portion linked to the operating rod (202) of the main line portion, and is detachable from the contact point (2) of the main line portion and is connectable to a ground (4) of the main line portion by virtue of a horizontal movement of the operating rod (202) of the main line portion,
the disconnector (30) of the drawing line portion has an operating rod (302) of the drawing line portion linearly connected with the conduction/insulation part (101) and a conductive member (301) of the drawing line portion linked to the operating rod (302) of the drawing line portion, and is detachable from the contact point (3) of the drawing line portion and is connectable to a ground (5) of the drawing line portion by virtue of a horizontal movement of the operating rod (302) of the drawing line portion,
**characterized in that**
- the conductive member (201) of the main line portion:
∘ is provided to be movable in a vertical direction with respect to the direction of the horizontal movement of the operating rod (202) of the main line portion,
∘ is connected to a link bar (204) integrally coupled with a support bar (207), the link bar (204) being in a vertical direction with respect to the length direction of the support bar (207) and provided to be elastically rotatable pivoting on the support bar (207), the support bar (207) protruding in a perpendicular direction with respect to the length direction of the operating rod (202) of the main line portion and being provided to be rotatable, and
∘ has a long sliding groove (203) in the length direction of the conductive member (201) of the main line portion, and a protrusion of the link bar (204) is slidably fitted into the sliding groove (203);
whereby after the operating rod (202) of the main line portion is pulled in horizontal direction and thus the circuit breaker (10) is interrupted, if the operating rod (202) of the main line portion more moves in the pulled-and-moved direction, the link bar (204) moves while the protrusion of the link bar (204) begins to move downward within the sliding groove (203), and if the movement of the operating rod (202) of the main line portion proceeds until restraint on the protrusion of the link bar (204) is all released, the elastic force of the protrusion of the link bar (204) pressurizes a bottom part of the sliding groove (203), thus releasing the conductive member (201) of the main line portion from the contact point (2) of the main line portion and subsequently, fitting its lower end to the ground (4) of the main line portion;
and **in that**
- the conductive member (301) of the drawing line portion:
∘ is provided to be movable in a vertical direction with respect to the direction of the horizontal movement of the operating rod (302) of the drawing line portion, and
∘ is connected to a link bar (304) integrally coupled with a support bar (307), the link bar (304) being in a vertical direction with respect to the length direction of the support bar (307) and provided to be elastically rotatable pivoting on the support bar (307), the support bar (307) protruding in a perpendicular direction with respect to the length direction of the operating rod (302) of the drawing line portion and being provided to be rotatable, where the operating rod (302) has a long sliding through-hole (303) in its length direction, and the support bar (307) is rotatably coupled to a slider (308) which is slidably fitted into the sliding through-hole (303), and the link bar (304) is integrally connected at its one end to the support bar (307) and is rotatably connected at the other end to the conductive member (301) of the drawing line portion;
whereby after the conductive member (201) of the main line portion is fitted to the ground (4) of the main line portion, if the operating rod (202) of the main line portion is more moved and the operating rod (302) of the drawing line portion connected to the conduction part (101) of the circuit breaker (10) is further pulled in the movement direction, the conductive member (201) of the main line portion is coupled to the ground (4) of the main line portion by virtue of the interaction of the sliding through-hole (303) and the slider (308) and then, with laying a constant time difference, the conductive member (301) of the drawing line portion is detached from the contact point (3) of the drawing line portion and is coupled to the ground (5) of the drawing line portion;
so that
when the operating rod (202) of the main line portion moves in length direction, it prevents the disconnectors (20) and (30) from being insulated before the circuit breaker (10).

## Patentansprüche

1. Gasisolierte Schaltanlage (1), die in einem Gehäuse (6) integriert ist und einen Leistungsschalter (10) und einen Trennschalter aufweist, die im Gehäuse (6) angeordnet sind, und mit einem Isoliergas gefüllt ist, um die Erzeugung eines durch einen offenen Stromkreis erzeugten Lichtbogens zu verhindern, wobei ein Trennschalter (20) eines Hauptleitungsabschnitts, der mit einer Kontaktstelle (2) des Hauptleitungsabschnitts lösbar verbunden ist, und ein Trennschalter (30) eines lastseitigen Leitungsabschnitts, der mit einer Kontaktstelle (3) des lastseitigen Leitungsabschnitts lösbar verbunden ist, an der linken und an der rechten Seite des Leistungsschalters (10) linear angeordnet sind,
wobei der Leistungsschalter (10) einen Leitungs-/Isolierabschnitt (101) aufweist, der in Abhängigkeit von der Position einer Betätigungsstange (202) des Hauptleitungsabschnitts einen leitenden oder einen isolierenden Zustand annimmt, wenn die Betätigungsstange (202) sich in die Längsrichtung bewegt,
wobei im Trennschalter (20) des Hauptleitungsabschnitts die Betätigungsstange (202) des Hauptleitungsabschnitts mit dem Leitungs-/Isolierabschnitt (101) linear verbunden ist und ein leitfähiges Element (201) des Hauptleitungsabschnitts mit der Betätigungsstange (202) des Hauptleitungsabschnitts verbunden ist, und wobei der Trennschalter durch eine horizontale Bewegung der Betätigungsstange (202) des Hauptleitungsabschnitts von der Kontaktstelle (2) des Hauptleitungsabschnitts trennbar und mit einer Masse (4) des Hauptleitungsabschnitts verbindbar ist,
wobei im Trennschalter (30) des lastseitigen Leitungsabschnitts eine Betätigungsstange (302) des lastseitigen Leitungsabschnitts mit dem Leitungs-/Isolierabschnitt (101) linear verbunden ist und ein leitfähiges Element (301) des lastseitigen Leitungsabschnitts mit der Betätigungsstange (302) des lastseitigen Leitungsabschnitts verbunden ist, und wobei der Trennschalter durch eine horizontale Bewegung der Betätigungsstange (302) des lastseitigen Leitungsabschnitts von der Kontaktstelle (3) des lastseitigen Leitungsabschnitts trennbar und mit einer Masse (5) des lastseitigen Abschnitts verbindbar ist;
**dadurch gekennzeichnet, dass**
das leitfähige Element (201) des Hauptleitungsabschnitts:
bezüglich der Richtung der horizontalen Bewegung der Betätigungsstange (202) des Hauptleitungsabschnitts in eine vertikale Richtung beweglich ist;
mit einer Verbindungsstrebe (204) verbunden ist, die mit einer Trägerstange (207) integral verbunden ist, wobei die Verbindungsstrebe (204) sich bezüglich der Längsrichtung der Trägerstange (207) in eine vertikale Richtung erstreckt und auf der Trägerstange (207) elastisch schwenkbar angeordnet ist, wobei die Trägerstange (207) senkrecht zur Längsrichtung der Betätigungsstange (202) des Hauptleitungsabschnitts hervorsteht und drehbar ist; und
eine lange Gleitnut (203) in der Längsrichtung des leitfähigen Elements (201) des versorgungsseitigen Leitungsabschnitts aufweist, wobei ein Vorsprung der Verbindungsstrebe (204) in die Gleitnut (203) gleitend eingepasst ist;
wobei, nachdem die Betätigungsstange (202) des Hauptleitungsabschnitts in die horizontale Richtung gezogen wurde, so dass der Leistungsschalter (10) unterbrochen wird, wenn die Betätigungsstange (202) des Hauptleitungsabschnitts sich weiter in die Zieh-/Bewegungsrichtung bewegt, die Verbindungsstrebe (204) sich bewegt, während der Vorsprung der Verbindungsstrebe (204) beginnt sich innerhalb der Gleitnut (203) nach unten zu bewegen, wobei, wenn die Bewegung der Betätigungsstange (202) des Hauptleitungsabschnitts fortgesetzt wird, die auf den Vorsprung der Verbindungsstrebe (204) ausgeübte Hemmkraft vollständig freigegeben wird, bis die elastische Kraft des Vorsprungs der Verbindungsstrebe (204) gegen einen unteren Teil der Gleitnut (203) drückt, wodurch das leitfähige Element (201) des Hauptleitungsabschnitts von der Kontaktstelle (2) des Hauptleitungsabschnitts getrennt wird und anschließend sein unteres Ende mit der Masse (4) des Hauptleitungsabschnitts in Kontakt kommt;
und dadurch, dass
das leitfähige Element (301) des lastseitigen Leitungsabschnitts:
in einer vertikalen Richtung bezüglich der Richtung der horizontalen Bewegung der Betätigungsstange (302) des lastseitigen Leitungsabschnitts beweglich ist; und
mit einer Verbindungsstrebe (304) verbunden ist, die mit einer Trägerstange (307) integral verbunden ist, wobei die Verbindungsstrebe (304) sich bezüglich der Längsrichtung der Trägerstange (307) vertikal erstreckt und auf der Trägerstange (307) elastisch schwenkbar angeordnet ist, wobei die Trägerstange (307) bezüglich der Längsrichtung der Betätigungsstange (302) des lastseitigen Leitungsabschnitts senkrecht hervorsteht und drehbar ist, wobei in der Betätigungsstange (302) ein langes durchgehendes Gleitloch (303) in ihrer Längsrichtung ausgebildet ist, und wobei die Trägerstange (307) mit einem Gleitelement (308) drehbar verbunden ist, das in das durchgehende Gleitloch (303) gleitend eingepasst ist, und wobei die Verbindungsstrebe (304) an ihrem einen Ende mit der Trägerstange (307) integral verbunden ist und am anderen Ende mit dem leitfähigen Element (301) des lastseitigen Leitungsabschnitts drehbar verbunden ist,
wobei, nachdem das leitfähige Element (201) des Hauptleitungsabschnitts mit der Masse (4) des Hauptleitungsabschnitts verbunden ist, wenn die Betätigungsstange (202) des Hauptleitungsabschnitts weiter bewegt wird und die Betätigungsstange (302) des mit dem Leitungsabschnitt (101) des Leistungsschalters (10) verbundenen lastseitigen Leitungsabschnitts weiter in die Bewegungsrichtung gezogen wird, das leitfähige Element (201) des versorgungsseitigen Leitungsabschnitts aufgrund der Wechselwirkung zwischen dem durchgehenden Gleitloch (303) und dem Geleitelement (308) mit der Masse (4) des versorgungsseitigen Leitungsabschnitts verbunden wird, und anschließend das leitfähige Element (301) des lastseitigen Leitungsabschnitts mit einer konstanten Zeitdifferenz von der Kontaktstelle (3) des lastseitigen Leitungsabschnitts getrennt und mit der Masse (5) des lastseitigen Leitungsabschnitts verbunden wird;
so dass, wenn die Betätigungsstange (202) des Hauptleitungsabschnitts sich in die Längsrichtung bewegt, verhindert wird, dass die Trennschalter (20) und (30) vor dem Leistungsschalter (10) isoliert werden.

## Revendications

1. Commutateur haute tension isolé au gaz (1) ayant d'un seul tenant un boîtier (6), un interrupteur (10) et un sectionneur dans le boîtier (6) et étant rempli d'un gaz isolant pour prévenir la génération d'un arc résultant d'un circuit ouvert, un sectionneur (20) d'une partie de ligne principale raccordé de manière détachable à un point de contact (2) de la partie de ligne de principale et un sectionneur (30) d'une partie de ligne d'étirage de charge raccordé de manière détachable à un point de contact (3) de la partie de ligne d'étirage étant disposées de manière linéaire à gauche et à droite de l'interrupteur (10),
l'interrupteur (10) a une partie de conduction/isolation (101) effectuant une conduction et une isolation dépendant de la position d'une tige de fonctionnement (202) de la partie de ligne principale quand ladite tige de fonctionnement (202) se déplace dans le sens de la longueur,
le sectionneur (20) de la partie de ligne principale a la tige de fonctionnement (202) de la partie de ligne principale raccordée de manière linéaire à la partie de conduction/isolation (101) et un élément conducteur (201) de la partie de ligne principale lié à la tige de fonctionnement (202) de la partie de ligne principale, et est détachable du point de contact (2) de la partie de ligne principale et est raccordable à une masse (4) de la partie de ligne principale, en vertu d'un mouvement horizontal de la tige de fonctionnement (202) de la partie de ligne principale,
le sectionneur (30) de la partie de ligne d'étirage a une tige de fonctionnement (302) de la partie de ligne d'étirage raccordée de manière linéaire à la partie de conduction/isolation (101) et un élément conducteur (301) de la partie de ligne d'étirage lié à la tige de fonctionnement (302) de la partie de ligne d'étirage, et est détachable du point de contact (3) de la partie de ligne d'étirage, et est raccordable à une masse (5) de la partie de ligne d'étirage, en vertu d'un mouvement horizontal de la tige de fonctionnement (302) de la partie de ligne d'étirage,
**caractérisé en ce que**
- l'élément conducteur (201) de la partie de ligne principale :
∘ est fourni de façon à être mobile dans une direction verticale relativement à la direction du mouvement horizontal de la tige de fonctionnement (202) de la partie de ligne principale,
∘ est raccordé à une barre de liaison (204) intégralement raccordée avec une barre de support (207), la barre de liaison (204) étant dans une direction verticale relativement au sens de la longueur de la barre de support (207) et fournie de manière à être rotative élastiquement, en pivotant sur la barre de support (207), la barre de support (207) saillant dans une direction perpendiculaire par rapport au sens de la longueur de la tige de fonctionnement (202) de la partie de ligne principale et étant fournie de manière à être rotative, et
∘ a une longue cannelure coulissante (203) dans le sens de la longueur de l'élément conducteur (201) de la partie de ligne principale, et une saillie de la barre de liaison (204) est reliée de manière coulissante dans la cannelure coulissante (203) ;
moyennant quoi, après que la tige de fonctionnement (202) de la partie de ligne principale est tirée dans une direction horizontale et donc l'interrupteur (10) est interrompu, si la tige de fonctionnement (202) de la partie de ligne principale se déplace davantage dans la direction de traction et de déplacement, la barre de liaison (204) se déplace tandis que la saillie de la barre de liaison (204) commence à se déplacer vers le bas dans la cannelure coulissante (203) et si le mouvement de la tige de fonctionnement (202) de la partie de ligne principale se poursuit jusqu'à ce que la limitation sur la saillie de la barre de liaison (204) soit totalement libérée, la force élastique de la saillie de la barre de liaison (204) pressurise une partie inférieure de la cannelure coulissante (203), en libérant ainsi l'élément conducteur (201) de la partie de ligne principale du point de contact (2) de la partie de ligne principale et ensuite, en adaptant son extrémité inférieure à la masse (4) de la partie de ligne principale ;
et **en ce que**
- l'élément conducteur (301) de la partie de ligne d'étirage :
∘ est fourni de façon à être mobile dans une direction verticale par rapport à la direction du mouvement horizontal de la tige de fonctionnement (302) de la partie de ligne d'étirage et
∘ est raccordé à une barre de liaison (304) raccordée intégralement à une barre de support (307), la barre de liaison (304) étant dans une direction verticale par rapport au sens de la longueur de la barre de support (307) et fournie de manière à être élastiquement rotative en pivotant sur la barre de support (307), la barre de support (307) saillant dans une direction perpendiculaire par rapport au sens de la longueur de la tige de fonctionnement (302) de la partie de ligne d'étirage et étant fournie de façon à être rotative, la tige de fonctionnement (302) ayant un long orifice passant coulissant (303) dans le sens de sa longueur, et la barre de support (307) étant raccordée de manière rotative à un patin (308) installé de manière coulissante dans l'orifice passant coulissant (303), et la barre de liaison (304) est intégralement raccordée à une de ses extrémités à la barre de support (307) et est raccordée de manière rotative, à l'autre extrémité, à l'élément conducteur (301) de la partie de ligne d'étirage ;
moyennant quoi, après que l'élément conducteur (201) de la partie de ligne principale est installé sur la masse (4) de la partie de ligne principale, si la tige de fonctionnement (202) de la partie de ligne principale est davantage déplacée et que la tige de fonctionnement (302) de la partie de ligne d'étirage raccordée à la partie de conduction (101) de l'interrupteur (10) est en outre tirée dans la direction du mouvement, l'élément conducteur (201) de la partie de ligne principale est raccordé à la masse (4) de la partie de ligne principale en vertu de l'interaction de l'orifice passant coulissant (303) et du patin (308) et ensuite, en établissant une différence de temps constante, l'élément conducteur (301) de la partie de ligne d'étirage est détaché du point de contact (3) de la partie de ligne d'étirage et est raccordé à la masse (5) de la partie de ligne d'étirage ;
de sorte que
lorsque la tige de fonctionnement (202) de la partie de ligne principale se déplace dans le sens de la longueur, elle empêche les sectionneurs (20) et (30) d'être isolés avant l'interrupteur (10).
